(19) Europäisches Patentamt
European Patent Office
Office européen des brevets

(11) EP 1 018 633 A2

(12) EUROPEAN PATENT APPLICATION

(43) Date of publication:
**12.07.2000 Bulletin 2000/28**

(51) Int. Cl.$^7$: **G01B 11/26**, G01B 11/02

(21) Application number: **99125554.8**

(22) Date of filing: **21.12.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **05.01.1999 SG 9900008**

(71) Applicant:
**Natsteel Technology Investments PTE Ltd**
**Singapore 628048 (SG)**

(72) Inventors:
- **Bhat, Karkala Panduranga Rajesh**
  **Singapore 610111 (SG)**
- **Hup, Low Lian**
  **Singapore 640416 (SG)**

(74) Representative:
**Grünecker, Kinkeldey,**
**Stockmair & Schwanhäusser**
**Anwaltssozietät**
**Maximilianstrasse 58**
**80538 München (DE)**

## (54) Bar angle measurement system

(57) The present bar angle measurement (BAM) system is mounted on a bar bending apparatus which is well known to those in the bar bending industry. The BAM system comprises three main units, the light and CCD assembly unit, a mounting unit, and a control unit. The light and CCD assembly unit is mounted on the bar bending apparatus via the mounting unit and positioned directly over a turn table where the bar bending occurs. The light and the CCD assembly comprise CCIR monochrome camera with fluorescent lighting. The lighting provides the local luminance required for the camera to capture the image of the bent bar. The control unit controls the process flow of the BAM system.

1
10
20
30
31
32
33
50
54
56

FIGURE 1

EP 1 018 633 A2

## Description

FIELD OF THE INVENTION

The present invention relates generally to the field of bar bending apparatus, and in particular, to a system for measuring the angle of the bend of bars or other elongated linear objects which are bent on the bar bending apparatus.

BACKGROUND OF THE INVENTION

In many industrial applications, there is a need for metal bars which are bent at a certain angle. The bending of the bars are accomplished using a bar bending machine which is a well-known device in the industry. Often times, the bars need to be bent at a precise angle where significant errors in the bent angle are not tolerated. Although the bar bending machine can be programmed to bend bars at a certain angle, the bars do not always bend in a predictable manner. To achieve the necessary accuracy, it is necessary for operators of the bar bending machines to manually measure the bent angle of each bent bar using a large protractor. To measure the angle, the operator must first unload the bar off the bar bending machine. If the measurement shows an error in the bending process, then the operator would manually make the necessary adjustment to compensate for the error. The manual measuring of the bent bars reduces the efficiency and tends to be more prone to human error. While it would desirable to have an automated system for measuring the angle of the bent bars, currently, no such system is known to exist.

OBJECT OF THE INVENTION

It is therefore an object of the present invention to automatically measure the angle of the bent bars without having to unload the bent bars from the bar bending machine, and thus increasing productivity and reducing errors.

SUMMARY OF THE INVENTION

The present bar angle measurement (BAM) system is mounted on a bar bending apparatus which is well known to those in the bar bending industry. The BAM system comprises three main units, the light and charged coupled device (CCD) assembly unit, a mounting unit, and a control unit. The light and CCD assembly unit is mounted on the bar bending apparatus via the mounting unit and positioned directly over a turn table where the bar bending occurs. The light and the CCD assembly comprise centre for communication interface research (CCIR) monochrome camera with appropriate lighting. The lighting provides the local luminance required for the camera to capture the image of the bent bar. The control unit controls the process flow of the BAM system.

The control unit comprises basically a computing apparatus, display, and a user input device such as a keyboard. The computing apparatus includes a motion control card, various drivers, and a frame grabber card. The control system is interfaced with the bar bending apparatus as well as the light and CCD assembly unit such that the entire bar angle measurement process can be fully automated. The control unit may be located near the bar bending apparatus or may be located remotely as the situation dictates.

To begin the bar angle measurement process, the control unit triggers the CCD camera to capture the first image of the empty turn table without the presence of the bar and the image is stored in memory. The camera is positioned such that the former is generally in the center of the image. The camera is adjusted to capture only those portions of the bar bender which is necessary for the angle measurement, mainly the turn table and some of its immediate surrounding region. A bar is then placed into position on the turn table and the bar is bent per normal procedure. After the bar has been bent, the control unit triggers the CCD camera again to capture the second image, which is the image of the turn table with the bar which has been bent, and the image is stored in memory.

After the two images have been captured and stored in memory, the steps to follow are related to the processing of the images and to the process of obtaining the bent angle. In the next step, the absolute difference between the intensity of the pixels from the first and second image is taken to yield what is termed ComputeImage. Essentially, the first image and the second image contain identical features except that the second image contains the bent bar. Therefore, after the subtraction, the resulting ComputeImage contains essentially the image of the bent bar.

Sometimes there are residual images left in the ComputeImage due to various debris such as metal dust falling from the bar or the environment. If these debris do not appear identically in the first and the second images, residual images will appear in the ComputeImage. These images are typically very small compared to the image of the bar and are eliminated during an erosion operation.

An operation called Close is applied specific number of times on the above image buffer ComputeImage to obtain a new modified image buffer. The Close operation is performed basically to compensate for the erosion operation which may have eliminated some portions which are necessary part of the image.

The resultant image buffer ComputeImage undergoes in its next step the elimination of unnecessary regions in the image. One of these regions is the portion of the bar which was in contact with the former. During the subtraction process, the image of the former is eliminated or subtracted out since the image of the former is identical for both the first and second image. During this subtraction process, the portion of the image of the bar which is in contact with the former is also partially eliminated leaving a slight rounded dent on the image of the bars. This rounded portion can cause significant errors in the angle measurement process, and hence, they are completely eliminated from the image.

In the next step, the bar regions are detected by searching for pixels having the corresponding intensity. Then, it is determined whether there are two or more bar regions. In the cases where this condition is not, it is determined whether there are one or no bar regions. In either case, an error message results. For situation where there is only one bar region, an error message is given indicating that there is only one bar region. Where there are no bar regions, an error message is given indicating that there are no bar regions.

If on the other hand, two or more regions are detected, then the image is segmented into a horizontal and vertical region. This well-known segmentation process is necessary to account for some, albeit rare, situations where the bar region is split into two regions. The reason may be due to aberration in the lighting conditions, etc. In such a situation, split bar image is combined to form one region. This is not a problem so long as the horizontal and vertical regions are kept separate.

Once the two regions are segmented, the angle of the two regions is measured. The angle is measured in relation to vertical and horizontal reference planes, which are perpendicular to each other. The angles are measured in small increments of several pixels. An average is taken of all of the measured angles. The final angle is then displayed.

## BRIEF DESCRIPTION OF THE DRAWINGS

FIG. 1 is perspective diagram of the present bar angle measurement (BAM) system implemented on an existing bar bending apparatus.

FIG. 2 is a flow diagram of the present bar angle measurement process.

FIG. 3 is a top view of the bar bending apparatus without a bar, which is the view seen by the CCD camera of the present BAM system when taking the first image.

FIG. 3A is the first image taken by the CCD camera of the view shown in FIG. 3.

FIG. 4 is a top view of the bar bending apparatus after a bar has been bent, which is the view seen by the CCD camera of the present BAM system when taking the second image.

FIG. 4A is the second image taken by the CCD camera of the view shown in FIG. 4.

FIG. 5 is a top view of the bar bending apparatus after a bar has been bent in an opposite direction as the bar shown in FIG. 5.

FIG. 6 shows the resulting image, ComputeImage, after the first image is subtracted from the second image, and after the ComputeImage has been binarized.

FIG. 7 shows the ComputeImage of FIG. 6 after the former region has been removed.

FIG. 8 illustrates the present method of measuring the angle of the bars.

## DETAILED DESCRIPTION OF THE INVENTION

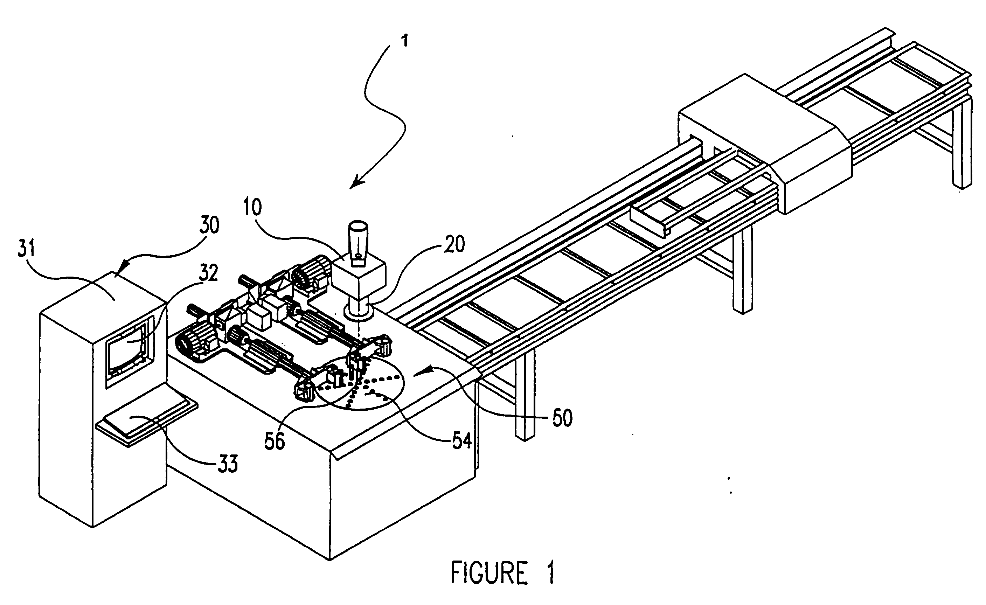

FIG. 1 illustrates the present bar angle measurement (BAM) system 1 mounted on a typical bar bending apparatus 50 which is well known to those in the bar bending industry. The BAM system 1 comprises three main units, the light and charge coupled device (CCD) assembly unit 10, the mounting unit 20, and the control unit 30. The light and CCD assembly 10 is mounted on the bar bending apparatus 50 via the mounting unit 20 and positioned directly over the turn table 54 where the bar bending occurs. The light and the CCD assembly 10 comprise centre for communication interface research (CCIR) monochrome camera with appropriate lighting. The lighting provides the local luminance required for the camera to capture the image of the bent bar. The control unit 30 controls the process flow of the BAM system.

The control unit 30 comprises basically a computing apparatus 31, display 32, and a user input device such as a keyboard 33. The computing apparatus 31 includes a motion control card, various drivers, and a frame grabber card (all not shown). The control system 30 is interfaced with the bar bending apparatus 50 as well as the light and CCD assembly unit 10 such that the entire bar angle measurement process can be fully automated. The control unit 30 may be located near the bar bending apparatus 50 or may be located remotely as the situation dictates.

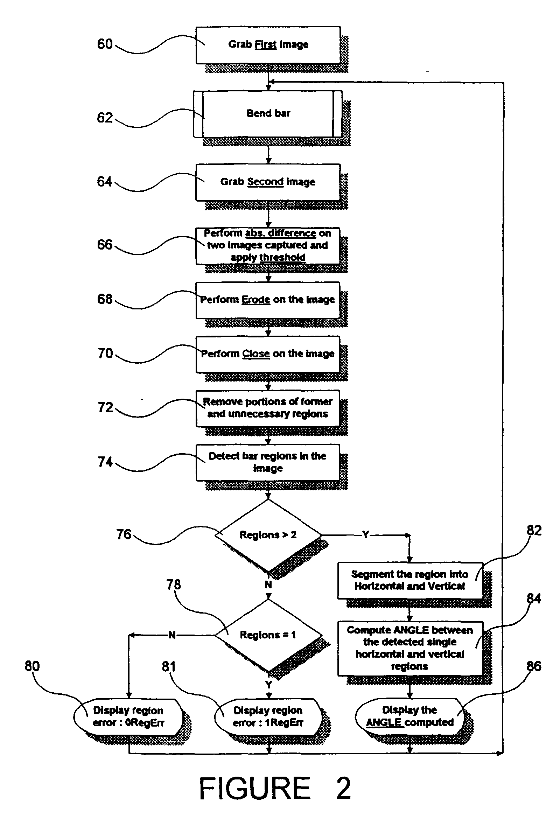

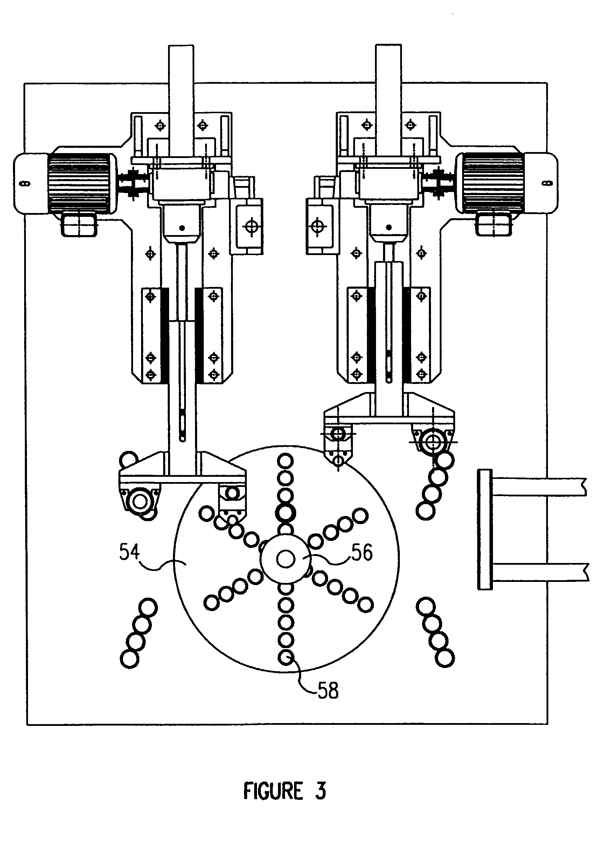

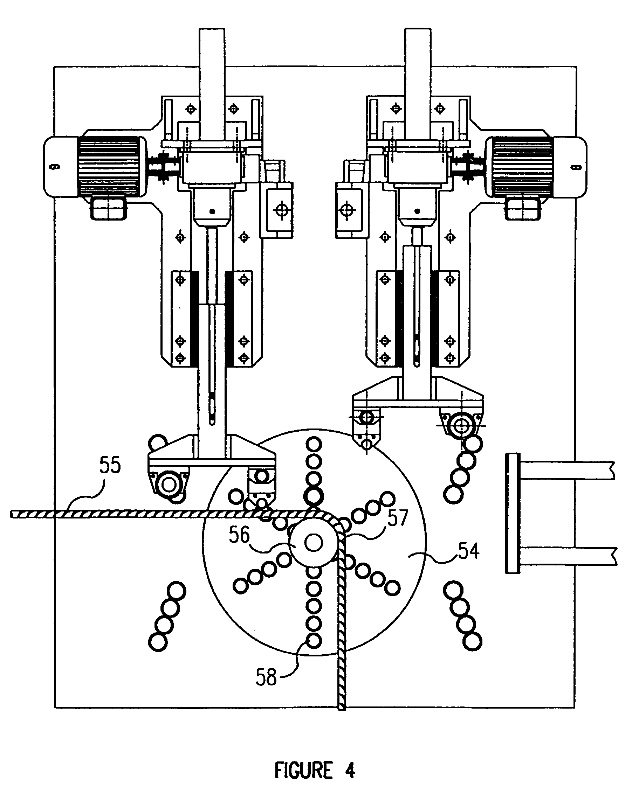

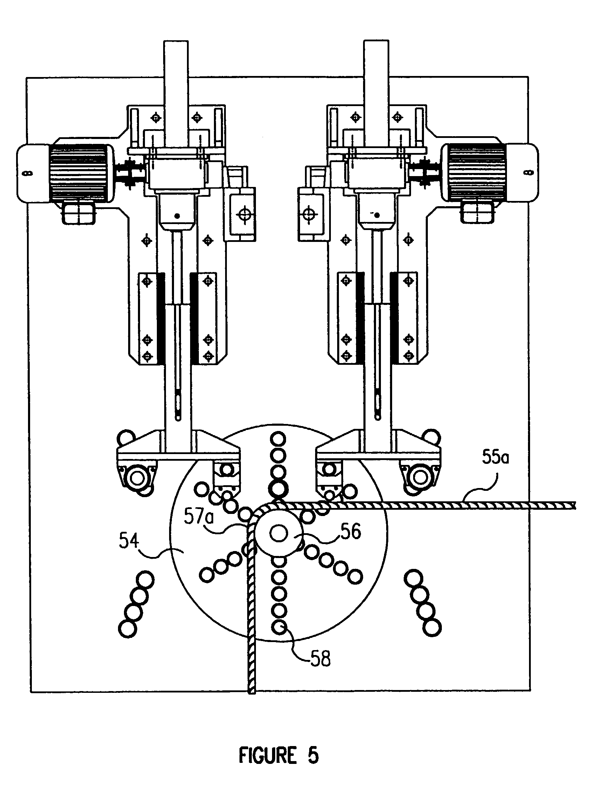

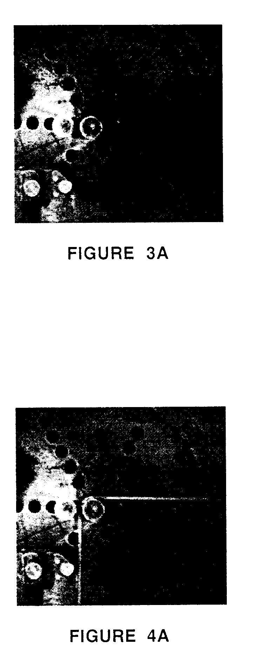

The angle measurement process will be explained via the flow diagram illustrated in FIG. 2. Referring now to FIG. 2, in step 60 the control unit 30 triggers the CCD camera to capture the first image of the empty turn table 54 without the presence of the bar, FIG. 3, and the image, FIG. 3A, is stored in memory. The camera is positioned such that the former 56 is generally in the center of the image. The camera is adjusted to capture only those portions of the bar bender which is necessary for the angle measurement, mainly the turn table 54 and some of its immediate surrounding region as can be seen in FIG. 3A and 4A. In step 62, a bar is then placed into position on the turn table 54 and the bar is bent per normal procedure. After the bar has been bent, the control unit 30 triggers the CCD camera again to capture the second image in step 64, which is the image of the turn table 54 with the bar 55 which has been bent, FIG. 4, and the image, FIG. 4A, is stored in memory.

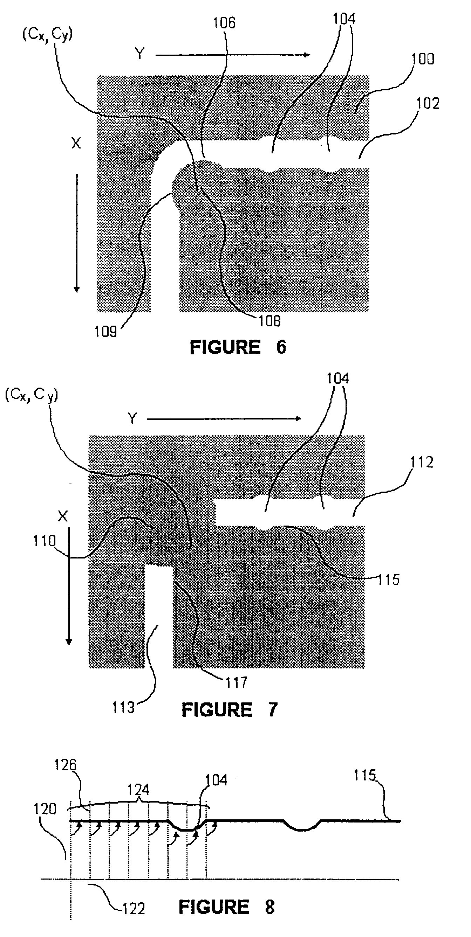

In general, the image, represented mathematically as $I$, has a $(X, Y)$ coordinate system as shown in FIG. 6. The value of intensity at each point is defined as $I(X, Y)$ and its size as $(I_X, I_Y)$. The centre of the former is $(C_X, C_Y)$. The location of the former center is determined from the second image and is located by searching generally in the center region for a circular object having a known diameter. Knowing the location of the center of the former 56 is useful as it provides a reference point for locating the bars and for measuring the angle.

After the two images have been captured and stored in memory, the steps to follow are related to the processing of the images and to the process of obtaining the bent angle. Still referring to FIG. 2, in the next step 66, the absolute difference between the intensity of the pixels from the first and second image is taken to yield what is termed ComputeImage. Mathematically, the operation can be expressed in the following way:

$$I(X, Y) = |I_1(X, Y)-I_2(X, Y)| \text{ ; for } X = 1 \text{ to } I_x \text{ and } Y = 1 \text{ to } I_y$$

where $I_1(X, Y)$ represents the first image and $I_2(X, Y)$ represents the second image. Essentially, the first image and the second image contain identical features except that the second image contains the bent bar. Therefore, after the subtraction, the resulting ComputeImage contains essentially the image of the bent bar.

Due to the occasional lighting difference between the first and second image, the subtraction does not always yield just the bent bar. The intensity of the pixels of the features created by the lighting difference, however, is not very great, and hence, these features are eliminated when the ComputeImage is binarized. The binarization is performed at a predetermined threshold φ. The value of this threshold φ depends on the type of lighting condition most frequently found in the images. Mathematically, the operation can be expressed in the following way:

$$I(X, Y) = 1 \text{ ; If } I(X, Y) >= \varphi \; 0 \text{ ; Otherwise; where } X = 1 \text{ to } I_x \text{ and } Y = 1 \text{ to } I_y$$

The resulting image after the binarization process is shown in FIG. 6. The gray areas 100 represent those areas which have been successfully subtracted out of the image. The white areas 102 represent the areas of the image which have not been subtracted. Ideally, the white areas should only include the bent bar and no other features of the turn table 54 or the bar bender 50. However, it can be seen from FIG. 6 that sometimes features other than the bar itself, i.e. 104, are erroneously included in the white areas. The way in which these features are dealt with shall be explained further down below.

Another reason why there may be residual images left in the ComputeImage is that there are various debris such as metal dust falling from the bar or the environment. If these debris do not appear identically in the first and the second images, residual images will appear in the ComputeImage. These images are typically very small compared to the image of the bar and are eliminated during the erosion operation in step 68. The morphological operation, erosion, is a well-known process which basically peels off layers from objects or particles, removing extraneous pixels and small particles from the image. The Erosion operation is formally defined as,

$$E(X, Y) = I(X, Y) \, \theta \, S(I,J)$$

where,

$X = 1$ to $I_x$ and $Y = 1$ to $I_y$ ;
I = 1 to K and J = 1 to K,
K is any Odd integer number >= 3.

Erosion in the above context is explained as intersection of all the translates of $I(X, Y)$ maintaining the distance through row and column index (i.e. I & J) of S, which are having a logical value of 1. In simpler terms, if S matches the corresponding neighborhood values exactly, then centre pixel of $I$ is set to logical 1, otherwise set to zero. This effect would be to peel off the layers of objects.

Still referring to FIG. 2, in step 70, an operation called Close is applied specific number of times on the above image buffer ComputeImage to obtain a new modified image buffer. The Close operation is performed basically to compensate for the erosion operation which may have eliminated some portions which are necessary part of the image. The Close operation can be explained by defining another term, dilation, which is basically an operation to add layers to objects or particles, or enlarging them. Dilation can return eroded objects to their original size, but not necessarily to their original shape. Dilation is formally defined as,

$$E(X, Y) = I(X, Y) \oplus S(I,J)$$

where,

$X = 1$ to $I_x$ and $Y = 1$ to $I_y$ ;
I = 1 to K and J = 1 to K,
K is any Odd integer number >= 3.

Dilation in the above context is explained as the union of all the translates of $I(X, Y)$ with distance being row and column index (i.e. I & J) of S, having a logical value of 1. In simpler terms, for all I having a logical value of 1, the centre of S is mapped onto I coordinate, with all the corresponding values of I being replaced by S. This dilation operation being followed by the erosion operation is termed as Close operation.

The resultant image buffer ComputeImage undergoes in its next step 72 the elimination of unnecessary regions in the image. As shown in FIG. 6, one of these regions is the portion of the bar, 106, which was in contact with the former. During the subtraction process in step 66, the image of the former is eliminated or subtracted out since the image of the former is identical for both the first and second image. In this image, the former has been subtracted out which basically left a gray circular area 108. During this subtraction process, the portion of the image of the bar which is in contact with the former is also partially eliminated leaving a slight rounded dent 109 on the bars. This rounded portion 109 can cause significant errors in the angle measurement process, and hence, they are completely eliminated from the image as shown in FIG. 7. As can be seen in the figure, the portion of the bar 106, FIG. 6, has been replaced with a gray area 110.

When eliminating the former area, it is important to account for the thickness of the bar so that all of the bar in the region is eliminated. Leaving a portion of bar in tact may produce errors in the angle measurement process. The thickness of the bar can be entered into the control unit 30 by an operator during the bar bending process. Moreover, it is also important to take into consideration the direction in which the bar is being bent. For instance, the bar 55 in FIG. 4 is being bent such as a way that the portion 57 of the bar 55 which is in contact with the former 56 is generally on the right side of the former 56. Compare this to the FIG. 5 where the bar 55a is being bent in such as way such that the portion 57a of the bar 55 which is contact with the former 56 is generally on the left side of the former 56. The direction of the bend can be entered into the control unit 30 by an operator.

Still during step 72, in addition to the former area, any residual images left near the four edges of the image are eliminated. Typically, such residual images may include a operator's hand, an inadvertently-placed tools, etc. During this process, it is important to stay sufficiently near the edge so as to avoid removing any of the bar portions.

After all of the removal processes in step 72 are completed, the resulting image should ideally have two white regions, one for each segment of the bar. FIG. 7 shows one such image having region one, 112, and region two, 113. The image in FIG. 7 is actually not the ideal in that the horizontal bar region 112 contains images of the holes 58 from the turn table 54, FIG. 3, as shown here as rounded white region 104, or "blob", in FIG. 7. An ideal image would only show the bar as a straight rectangular block. These blobs can cause a significant error in the measurement of the angles, and are dealt with in a special way during the angle measurement step which shall be explained further below.

In step 74 of FIG. 2, the bar regions are detected by searching for pixels having the corresponding intensity. In step 76, it is determined whether there are two or more bar regions. In the cases where this condition is not, it is determined whether there are one or no bar regions in step 78. In either case, an error message results. For situation where there is only one bar region, an error message is given in step 81 indicating that there is only one bar region. Where there are no bar regions, an error message is given in step 80 indicating that there are no bar regions.

Although both messages indicate error, it is useful to know whether one or no regions are detected because it gives some indication as to the source of the error. For the situation where no bar regions are detected, the reasons may be that no bar was placed on the turn table (thus requiring the operator to place a bar), or simply that there is some major misreading from the BAM system. For the situation where only one bar region is detected, the reason is usually that one portion of the bent bar is shorter than the diameter of the former, and therefore, the image of the bar is completely or sufficiently eliminated during step 72 where the former region is removed from the image. For this situation, the operator simply needs to manually measure the angle of the bar.

If during step 76, two or more regions are detected, then the image is segmented into a horizontal and vertical region. This well-known segmentation process is necessary to account for some, albeit rare, situations where the bar region is split into two regions. The reason may be due to aberration in the lighting conditions, etc. In such a situation, split bar image is combined to form one region. This is not a problem so long as the horizontal and vertical regions are kept separate.

Once the two regions are segmented, the angle of the two regions is measured. The angle is measured using the "inside" lines of the bar images. So for instance, for the image in FIG. 7, the bottom line 115 of the bar image 112, and the right line 117 of the bar image 113 will be used to measure the angles. The angle is measured in relation to vertical and horizontal reference planes, 120 and 122 respectively, which are perpendicular to each other as shown in FIG. 8. So for the bottom line 115, the angle is measured against the vertical plane 120; and for the right line 117, the angle is measured against the horizontal plane 122. Then angle between the bottom line 115 and right line 117 is then calculated using simple trigonometry.

The angles are measured in small increments of several pixels. This is illustrated in FIG. 8 where angles for plurality of segments 124 are measured in relation to a line, 126 for instance, which is parallel to the vertical plane. Typically, a segment of a few pixels is sufficient for the measurement. Due to image imperfections, neither the bottom line 115 nor the right line 117 is perfectly straight. Therefore, each of the segments 126 may record an angle which is slightly different from each other. Therefore, an average is taken of all of the measured angles. Same procedure is followed for the right line 117. The final angle is displayed in step 86.

As mentioned above, an error in the measurement can sometimes occur due to the "blobs" (104 in FIG. 6 and FIG. 8) in the image. The blobs sometimes appears in the image because the turn table 54, FIG. 3, being a mechanical device, sometimes does not return to it original position. The turn table 54 has various holes 58, FIG. 3, which are grouped together in a straight line. When the turn table 54 is not in the identical position for both first and second image, these holes are not completed subtracted out in the ComputeImage. If some of these holes 58 happen to land on or near the bar, a blob may appear. Because the blobs severely distort the angle of the line being measured, the final displayed angle can deviate significantly from the correct angle. To avoid such errors, the incremental angles which are measured for the different segments 124 are compared with each other. If any measured angle deviates significantly from the other measured angles, the deviant angle is not taken into consideration when the angles are averaged.

The present invention may be embodied in other specific forms without departing from the spirit or essential characteristics thereof. For instance, although the present invention was described in reference to a bar, it is to be understood that an angle of any elongated linear objects such as tubes, pipes, etc. can be measured using the present system. The presently disclosed embodiments are, therefore, to be considered in all respects as illustrative and not restrictive, the scope of the invention being indicated by the appended claims and all changes which come within the meaning and range of equivalency of the claims are, therefore, to be embraced therein.

### Claims

**1.** In a bending apparatus having a turn table with a former for bending linear objects at an angle, a method of automatically measuring the angle of a linear object comprising the steps:

capturing a first image of said turn table without the linear object;
capturing a second image of said turn table with the linear object, said linear object having been bent at an angle by said bending apparatus;
obtaining a third image which is a difference between said first and second image;
processing said third image to yield substantially regions of said linear object;
detecting said linear object regions in said image; and
measuring the angle between said linear object regions.

**2.** The method of automatically measuring the angle of a linear object as recited in claim 1 wherein said processing step includes binarization of said third image.

**3.** The method of automatically measuring the angle of a linear object as recited in claim 2 wherein said processing step further includes Close and erosion operation.

**4.** The method of automatically measuring the angle of a linear object as recited in claim 3 wherein said processing step further includes removing from said third image a former region and unnecessary region.

**5.** The method of automatically measuring the angle of a linear object as recited in claim 1 wherein said angle measureing step comprise measuring said angle in small increments of several pixels.

**6.** The method of automatically measuring the angle of a linear object as recited in claim 5 wherein angles measured in small increments of several pixels are averaged.

**7.** The method of automatically measuring the angle of a linear object as recited in claim 4 wherein said angle measureing step comprise measuring said angle in small increments of several pixels.

**8.** The method of automatically measuring the angle of a linear object as recited in claim 7 wherein angles measured in small increments of several pixels are averaged.

**9.** The method of automatically measuring the angle of a linear object as recited in claim 1 wherein said linear object is a bar.

**10.** Bar angle measurement system for measuring an angle of a bar bent on a bar bending apparatus, said system comprising:

a light and CCD assembly unit positioned to capture an image of the bar on said bar bending apparatus;
a mounting unit for mounting said light and CCD assembly unit on said bar bending apparatus; and
a control unit interfaced with said light and CCD assembly unit to receive and process images captured by said light and CCD assembly unit, wherein said control unit measures an angle of an image of the bent bars.

**11.** A bar angle measurement system for measuring an angle of a bar bent on a bar bending apparatus having a turn table, said system comprising:

a light and CCD assembly unit positioned to capture an image of the bar on said bar bending apparatus, said light and CCD assembly unit capturing a first image of said turn table without the bar, and capturing a second image of said turn table with a bar after it has been bent by said bending apparatus;
a mounting unit for mounting said light and CCD assembly unit on said bar bending apparatus; and
a control unit interfaced with said light and CCD assembly unit to receive and process said first and second images captured by said light and CCD assembly unit, wherein said control unit obtains a third image which is a difference between said first and second image, said third image yielding substantially only bar regions, said control unit mesuring the angle between said bar regions.

1
10
20
30
31
32
33
50
54
56

FIGURE 1

60
Grab First image
62
Bend bar
64
Grab Second image
66
Perform abs. difference on two images captured and apply threshold
68
Perform Erode on the image
70
Perform Close on the image
72
Remove portions of former and unnecessary regions
74
Detect bar regions in the image
76
Regions > 2
Y
N
82
Segment the region into Horizontal and Vertical
78
Regions = 1
N
Y
84
Compute ANGLE between the detected single horizontal and vertical regions
80
81
86
Display region error : 0RegErr
Display region error : 1RegErr
Display the ANGLE computed

FIGURE 2

54
56
58

FIGURE 3

55
56
57
54
58

FIGURE 4

55a
57a
56
54
58

FIGURE 5

FIGURE 3A

FIGURE 4A

(Cx, Cy)
106
104
Y
100
102
X
109
108

FIGURE 6

(Cx, Cy)
104
Y
112
X
110
115
117
113

FIGURE 7

126
124
104
115
120
122

FIGURE 8